# EUROPEAN PATENT APPLICATION

(11) **EP 3 147 168 A1**
(43) Date of publication of application: **29.03.2017**
(21) Application number: 16183019.5
(22) Date of filing: 05.08.2016
(51) Int. Cl.: B60W 10/06, B60W 10/08, B60W 20/00

(54) **ADAPTIVE POWER MANAGEMENT FOR HYBRID VEHICLES**

(30) Priority: 25.09.2015 US 201562232487 P
(71) Applicant: Parker Hannifin Corp., Cleveland, OH 44124-4141 (US)
(72) Inventor: ZHANG, Yisheng, Dublin, OH 43016 (US); SONG, Guobiao, Dublin, OH 43016 (US)
(74) Representative: Belcher, Simon James

(57) **Abstract**

Control method and apparatus for a hybrid drive vehicle, having a prime mover, drive wheels, a hybrid mechanism having an energy storage device, and an electrical controller, involve collecting vehicle data characteristic of how the vehicle is operated, and comparison of the collected data with prescribed data, the prescribed data corresponding to a desired operation of the vehicle. A propulsion power limit of at least one of the hybrid mechanism or the prime mover is set based on the comparison.

## Description

This invention relates generally to a hybrid drive vehicle control method and system and to a vehicle having such method and system. More specifically, the invention relates to a method and system for propulsion power management of a hybrid vehicle to deter aggressive vehicle operation.

Hybrid drive vehicles may include a prime mover such as an internal combustion engine, drive wheels, and a hybrid mechanism. In an energy storing mode the hybrid mechanism may be driven by the drive wheels to capture energy under certain conditions, such as during vehicle braking. The captured energy may be stored in an energy storage device. In an energy expending mode the hybrid mechanism may expend the stored energy to drive the drive wheels to propel the vehicle. In the case of an electric hybrid vehicle, the hybrid mechanism may include an electrical motor generator mechanism and a battery. In the case of a hydraulic hybrid vehicle, the hybrid mechanism may include a hydraulic pump motor mechanism and an accumulator.

Hybrid drive vehicles may also include vehicle body power equipment. For example, if the vehicle is a refuse truck, the vehicle body power equipment may include a loader that operates when the vehicle is stationary to pick up refuse or refuse containers and dump the refuse in a refuse hauler container of the vehicle.

It is preferable to operate the hybrid vehicle without abrupt changes in power flow in order to minimise fuel consumption as well as wear and tear on the hybrid vehicle. This may be accomplished, for example, by gradually accelerating the vehicle (as opposed to quick burst of acceleration) and gradually decelerating the vehicle (as opposed to hard braking). Gradual acceleration can be achieved by slowly and evenly pressing the accelerator pedal, while gradual deceleration can be achieved by slowly and evenly pressing the brake pedal (when feasible). Gradual acceleration minimises power consumption and wear and tear on the tyres and drive train, while gradual braking minimises wear and tear on the braking system, tyres and suspension. Such operation can result in fuel savings as well as lower maintenance costs (e.g., less frequent brake changes and tyre replacement).

While gradual acceleration and gradual deceleration can conserve fuel and minimise wear and tear on the hybrid vehicle, such operation generally increases the amount of time required to move the hybrid vehicle from point "A" to point "B". This can be in conflict with operators of the hybrid vehicle, who may be compensated based on the amount of work done per day. For example, refuse collectors may have a predetermined route for each day of the week, where once the route is complete the workers' day is over and they are free to go. Thus, from the point of view of the worker it is desirable to navigate the route as quickly as possible, which inherently requires quick acceleration and deceleration. As a result, fuel consumption is increased along with wear and tear on the vehicle, which from the point of view of the vehicle owner is undesirable.

The invention provides apparatus and a method which can overcome one or more of the above and/or other problems. More particularly, operation of a hybrid vehicle, such as acceleration data and/or braking data, is monitored and compared to prescribed operating parameters (e.g., parameters desired by the vehicle owner). Based on the comparison, an inference can be drawn with respect to how the vehicle is being operated relative to a desired operation of the vehicle. When the operation of the vehicle is determined to be more aggressive than the desired operation (e.g., higher acceleration and deceleration rates than the prescribed rates, higher braking force that the prescribed force, etc.), the propulsion power output of the hybrid vehicle is limited. Since limiting the propulsion power output by the vehicle can result in slower operation of the vehicle, the vehicle driver may be discouraged from operating the vehicle in an aggressive manner. To further promote non-aggressive driving, the power limits imposed on the vehicle can be output to the driver via a display device or the like.

The invention provides a hybrid drive vehicle control method for a hybrid drive vehicle having a prime mover, drive wheels, a hybrid mechanism having an energy storage device, and an electrical controller is provided. The method includes: collecting vehicle data indicative of operation of the vehicle; comparing the collected vehicle data to prescribed data, the prescribed data corresponding to a desired operation of the vehicle; and setting a propulsion power limit of at least one of the hybrid mechanism or the prime mover based on the comparison.

Optionally, the step of comparing the collected vehicle data includes determining, based on the comparison, an event count corresponding to a relationship between the collected vehicle data and the prescribed vehicle data over a prescribed event period.

Optionally, the step of setting the propulsion power limit includes basing the propulsion power limit on the event count.

Optionally, the step of determining the event count includes incrementing the event count each time the collected vehicle data is exceeds the prescribed data over the prescribed event period.

Optionally, the step of determining the event count includes decrementing the event count each time the collected vehicle data is less than the prescribed data over the prescribed event period.

Optionally, the step of decrementing the event count includes decrementing the event count when the collected vehicle data is less than a predetermined percentage of the prescribed vehicle data.

Optionally, the step of decrementing the event count includes decrementing the event count when the collected vehicle data is less than or equal to the prescribed vehicle data over a prescribed time period.

Optionally, the step of setting the propulsion power limit based on the event count includes: decreasing the propulsion power limit as the event count increases; and increasing the propulsion power limit as the event count decreases.

Optionally, the relationship between the event count and the power limit is non-linear.

Optionally, the step of collecting vehicle data comprises collecting at least one of acceleration data, deceleration data, a brake pressure command, a brake pedal position, or automatic braking system activity.

Optionally, the step of determining the propulsion power limit includes decreasing the propulsion power limit when the comparison of the collected vehicle data and the prescribed vehicle data indicates a first manner of operation, and increasing the propulsion power limit when the comparison of the collected vehicle data and the prescribed vehicle data indicates a second manner of operation different from the first manner of operation.

Optionally, the first manner of operation includes the collected vehicle data exceeding the prescribed vehicle data.

Optionally, the second manner of operation includes the collected vehicle data being less than the prescribed vehicle data.

Optionally, the method includes applying the propulsion power limit to at least one of the hybrid mechanism or the prime mover to limit a propulsion power output of the respective prime mover or hybrid mechanism to the drive wheels.

Optionally, the method includes providing the propulsion power limit to a driver of the vehicle.

Optionally, the step of providing the propulsion power limit includes displaying the propulsion power limit on a display device of the vehicle.

Optionally, the step of displaying includes displaying the propulsion power limit on a liquid crystal display device or an LED display device.

The invention also provides a hybrid vehicle control system which includes an electrical controller having a processor and memory, and logic stored in the memory and executable by the processor, the logic adapted to cause the processor to perform the method described herein.

The invention also provides a hybrid vehicle which includes the vehicle control system described herein.

Optionally, the hybrid vehicle includes the prime mover; the drive wheels; and the hybrid mechanism having an energy storage device.

Optionally, the hybrid vehicle includes the vehicle body power equipment.

The invention is described below by way of example with reference to the accompanying drawings, in which:
Fig. 1 is a schematic representation of a wheeled hybrid land vehicle.
Fig. 2 is a flow chart showing steps of a method of controlling a hybrid drive vehicle.
Fig. 3 is a schematic diagram which shows a user interface for indicating the propulsion power limit to a vehicle operator.

The invention provides a method, a system and a vehicle that include a hybrid power mechanism. The invention is described by way of example in the context of a hybrid power mechanism embodied as a hydraulic motor/pump and accumulator. Other types of hybrid power mechanisms may be used such as for example an electric motor/generator and battery.

The system and method promote efficient use of a hybrid vehicle. In particular, the system and method determine operational characteristics of driver/operator of the hybrid vehicle. For example, based on collected data it can be determined if the operator is acting in a normal manner (also referred to as a preferred manner) or in an aggressive manner (a non-preferred manner). If it is determined the operator is acting in an aggressive manner, then propulsion power output of the hybrid vehicle may be progressively reduced to discourage such operation, while if the driver/operator is acting in a normal manner the propulsion power output of the vehicle is not reduced (or raised to compensate for previous reduction in propulsion power output). Such regulation of the propulsion power output can result in lower operating costs by promoting less aggressive operation of the vehicle, thereby conserving fuel and subjecting the vehicle to less wear and tear.

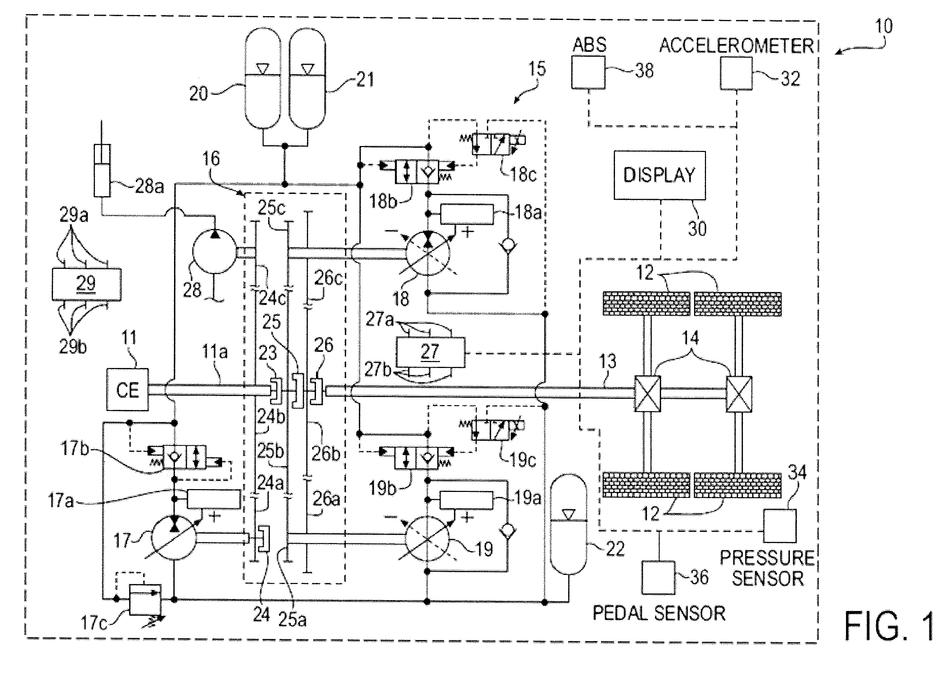

Referring now to the drawings in greater detail, Fig. 1 shows a hybrid drive vehicle 10, which may be any desired electric or hydraulic hybrid vehicle. In the preferred embodiment, the vehicle 10 is, for example, a hydraulic hybrid drive vehicle such as a large refuse pick up vehicle, although other types of vehicles are contemplated (e.g., a bus). The vehicle 10 includes a prime mover 11, which in the preferred embodiment is, for example, an internal combustion engine fueled by compressed natural gas and having a prime mover shaft 11a. The vehicle 10 also includes drive wheels 12 connected to a drive shaft 13 through differentials 14. The vehicle 10 also includes a hybrid mechanism 15. The hybrid mechanism 15 has an energy storing mode in which wheels 13 and/or prime mover 11 drive hybrid mechanism 15 through shafts 13 and 11a to capture and store energy under certain conditions such as braking vehicle 10. The hybrid mechanism 15 also has an energy expending mode that expends stored energy to drive the wheels 12 (to propel the vehicle 10) and/or to the prime mover 11 (to improve speed regulation). The vehicle 10 also includes a gear set 16 that drivingly connects prime mover 11, hybrid mechanism 15 and drive wheels 12 through shafts 13 and 11a.

Hybrid mechanism 15 includes hydraulic pump motor units 17, 18 and 19, each of which may be any suitable hydraulic pump or motor or pump motor unit. In the preferred embodiment, units 17, 18 and 19 are each a variable displacement bent-axis hydraulic pump motor and are each preferable hydraulic pump motor model C24 from Parker Hannifin Corporation of Cleveland, Ohio. Unit 17 operates as a hydraulic pump during the energy storing mode and operates as a motor under other conditions to assist the prime mover 11 to power vehicle body power equipment and/or regulate prime mover speed. Units 18 and 19 operate as motors to propel vehicle 10 during the energy expending mode, as also further described below. Controls 17a, 18a and 19a control the displacement of each of their associated units 17, 18 and 19 by controlling the swashplate (not shown) of each unit. As known in the art, controlling displacement in this manner controls speed and torque of units 17, 18 and 19. Valves 17b, 17c, 18b, 18c, 19b and 19c control fluid communication between each of their associated units 17, 18 and 19 and high pressure accumulators 20 and 21 and low pressure accumulator 22.

Gear set 16 in a known manner includes a first mechanical connection 23, a second mechanical connection 24, a third mechanical connection 25, and a fourth mechanical connection 26. First mechanical connection 23 selectively connects prime mover 11 and prime mover shaft 11a to drive shaft 13 and wheels 12 through connections 25 or 26, to provide a direct mechanical drive mode without use of hybrid mechanism 16, such as for relatively higher speed or relatively longer distance travel. Second mechanical connection 24 selectively connects hydraulic pump motor 17 to prime mover shaft 11a through gears 24a and 24b. Third mechanical connection 25 selectively connects hydraulic motors 18 and 19 to wheels 12 through gears 25a, 25b and 25c and drive shaft 13, with a relatively lower gear ratio for relatively lower travel speeds of vehicle 10. Fourth mechanical connection 26 selectively connects hydraulic motors 18 and 19 to wheels 12 through gears 26a, 26b and 26c and drive shaft 13, with an intermediate gear ratio for intermediate travel speeds of vehicle 10. An electronic controller 27 receives input signals 27a and provides output command signals 27b to operate units 17, 18 and 19 through their associated controls 17b, 18b and 19b, and to operate mechanical connections 23, 24, 25 and 26 through suitable wire or wireless connections. An output device 30, such as an LED or LCD device, light bar, etc. is communicatively coupled to the controller 27 to provide information to the driver concerning the current operational status of the hybrid vehicle as described in more detail below.

The hybrid vehicle 10 also includes an accelerometer 32 for determining an acceleration/deceleration rate of the vehicle 10, a brake pressure sensor 34 for determining hydraulic pressure applied to the brakes (not shown), a pedal position sensor for determining a position and/or rate of change in position of the brake pedal (not shown), and an ABS 38 for performing automatic braking operations. The accelerometer 32, pressure sensor 34, position sensor 36 and ABS 38 are communicatively coupled to the controller 27 to provide data thereto.

In an energy storing mode, hybrid mechanism 15 in a known manner captures and stores energy under certain conditions such as during vehicle braking. In this mode, pump 18, 19, and/or 17 is driven by wheels 12 through mechanical connection 24 and through mechanical connection 25 or 26 and provides braking resistance for vehicle 10. Pump 18, 19 and/or 17 captures the braking energy by generating high pressure hydraulic fluid that is communicated from pump 18, 19 and/or 17 and stored in accumulators 20, 21.

In an energy expending mode, hybrid mechanism 15 in a known manner expends stored energy in high pressure accumulators 20 and 21 to drive wheels 12 through shaft 13 and through mechanical connections 25 or 26 to propel vehicle 10. In this mode, pump 17 is disconnected from shaft 11a by mechanical connection 24. Also in this mode, valves 18b and 19b connect high pressure accumulators 20 and 21 to their associated hydraulic motors 18 and 19 to cause hydraulic motor 18 and 19 to drive wheels 12 through mechanical connection 25 and/or 26.

Vehicle 10 further includes vehicle body power equipment 28 that is powered by prime mover 11 through shaft 11a and gears 24b and 24c, usually when vehicle 10 is stationary. Vehicle body power equipment 28 may be any suitable equipment, and in the preferred embodiment 28 is, for example, a variable displacement hydraulic pump whose displacement and torque are determined, for example, by a swashplate (not shown). Output flow from pump 28 flows to vehicle body power equipment hydraulic cylinder 28a, which with pump 28 are components of a vehicle body power equipment such as, for example a loader (not shown) that operates when the vehicle 10 is stationary to pick up refuse or refuse containers (not shown) and dump the refuse in a refuse hauler container (not shown) of the vehicle 10. Pump 28 is controlled by a vehicle body controller 29 that receives inputs 29a and provides outputs 29b including outputs to change the output displacement of pump 28 through suitable wire or wireless connections.

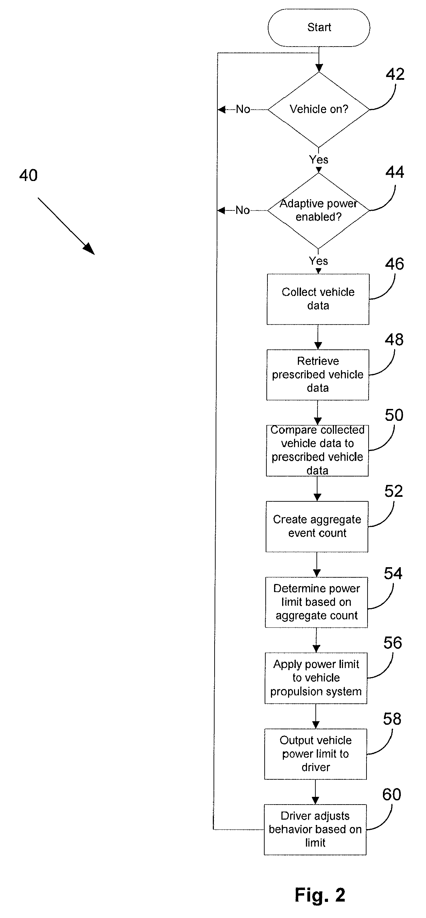

As shown in Fig. 2, the hybrid mechanism 15 operates according to a hybrid drive vehicle control method 40 to limit propulsion power output based on how the vehicle is being operated (aggressive, normal, etc.). In the following description the method 40 will be described in the context of the controller 27 executing the method steps. However, that method 40 may be executed by either the controller 27 or controller 29. Alternatively, portions of method 40 may be executed in controller 27 while other portions may be executed in controller 29.

Referring to Fig. 2, method 40 determines how the hybrid vehicle 10 is being operated, for example, based on data collected via inputs 27a of the controller 27. The controller 27, via outputs 27b, sets a propulsion power limit for the hybrid vehicle 10 to limit the maximum power that may be applied to the drive wheels 12. Further, controller 27 provides an output indicative of the propulsion power limit for the drive wheels 12, the output being viewable by an operator of the vehicle 10. The operator of the vehicle, viewing the propulsion power limit, will realise that aggressive operation provides an undesired result, (e.g., the time required to traverse the route is increased). In an attempt to minimise the time required to traverse the route, the operator will operate the vehicle in a less-aggressive manner, which will increase the propulsion power limit and eventually return to normal vehicle operation.

Beginning at step 42, the controller 27 determines if the vehicle 10 is in an "ON" state or an "OFF" state. Such determination may be made, for example, by monitoring a state of the key switch of the vehicle 10 via the inputs 27a. Alternatively, the ON/OFF state of the vehicle 10 may be determined by monitoring rotation of the prime mover 11 or any other means in which one can determine the ON/OFF state of a vehicle 10. If it is determined that the vehicle 10 is in the OFF state, then the method loops at step 42, while if it is determined the vehicle 10 is in the ON state the method moves to step 44.

At step 44, the controller 27 determines if the adaptive power control is enabled or disabled. Depending on the circumstances, it may be desirable to disable the adaptive power control. For example, authorised personnel, such as a supervisor, vehicle owner, etc., may have authority to override the adaptive power control. Alternatively or additionally, an urgent situation may warrant disabling the adaptive power control. The adaptive power control may be enabled or disabled, for example, via the operator interface 30 of the vehicle 10, via a key switch coupled to an input of the controller 27, via a wireless connection (including connections via the internet), etc. Preferably, the means by which the adaptive power control is enabled or disabled can be locked-out such that only authorised personnel can enable or disable the feature. If it is determined that adaptive power control is disabled, then the method moves back to step 42 and repeats, while if it is determined that adaptive power control is enabled the method moves to step 46.

At step 46 the controller 27, via inputs 27a, collects vehicle data characteristic of how the vehicle is operated. Data of interest can include one or more of vehicle acceleration data (from accelerometer 32), vehicle deceleration data (from accelerometer 32), a brake pressure command (from pressure sensor 34), a brake pedal position (from position sensor 36), or automatic braking system activity (from ABS 38). Additional data of interest may include a state of charge (SOC) of the energy storage system, and friction brake status (e.g., whether or not it is activated) during braking event. Such data can be used to indicate if energy recovery opportunities were unnecessarily missed.

Vehicle acceleration and deceleration data can be obtained, for example, from an accelerometer or like device. Brake pressure data may be obtained from a sensor (e.g., a pressure sensor) that monitors brake line pressure, while brake pedal position data may be obtained from a sensor (e.g., a potentiometer, resolver, etc.) that monitors a position of the brake pedal. Automatic braking system (ABS) activity data may be obtained directly from the automatic braking system, e.g., via a communication channel or the like between the controller 27 and the automatic braking system. The data can be collected on a periodic or continuous basis, and may be stored in a database for later retrieval.

Next at step 48 the controller 27 retrieves the prescribed vehicle data, for example, from memory of the controller 27. The prescribed vehicle data, which may be stored in a database or other storage means, corresponds to preferred (desired) operational characteristics of the vehicle 10. For example, to minimise fuel consumption and wear and tear on the vehicle 10, it may be preferred that the vehicle 10 accelerate and decelerate at a rate that does not exceed prescribed acceleration and deceleration rates. Similarly, to minimise wear and tear on the vehicle 10 it may be preferred that brake pressure does not exceed a prescribed brake pressure value, brake pedal position does not exceed a prescribed brake pedal position, and/or automatic braking events do not exceed a prescribed number of events per unit of time. The respective values may be application-specific and can vary from one vehicle to the next. The respective values can be determined empirically for a particular route over which the vehicle is operated, or set generically such that no matter which route the vehicle 10 is operated on the same parameters are used.

Next at step 50 the controller 27 compares the collected vehicle data to the corresponding prescribed vehicle data to determine how the vehicle 10 is being operated. For example, the collected acceleration data may be compared to the prescribed acceleration for the vehicle, the collected deceleration data may be compared to the prescribed deceleration data, and so on. If any of the collected data exceeds the corresponding prescribed data, then an aggregate event counter corresponding to the data exceeding the prescribed value is incremented as indicated at step 52. Similarly, when the collected vehicle data does not exceed the prescribed vehicle data, the respective aggregate event counter may be decremented. The counter may be decremented only when the collected vehicle data is less than a predetermined percentage of the prescribed vehicle data. It is also envisaged that the counter may be decremented only when the collected vehicle data is less than or equal to the prescribed vehicle data for a prescribed time period.

Thus, there may be an event counter corresponding to acceleration events that exceed the prescribed acceleration data, an event counter corresponding to deceleration events that exceed the prescribed deceleration data, and so on. It is also envisaged that a single aggregate event counter may be incremented when any of the collected vehicle data exceeds the prescribed vehicle data.

The event counters may be maintained over a prescribed event period. For example, the event period may be defined as a work shift (e.g., 09:00 to 17:00), a driver, a day, etc. Once the event period is over, the respective counters may be reset and the system operates at full propulsion power.

Moving to step 54, the controller 27 determines the propulsion power limit for the vehicle based the comparison of the collected and prescribed vehicle data. Thus, in the present example the propulsion power limit may be determined by analyzing the one or more event counters to determine if power should be reduced and if so by how much. Based on the analysis of the event counters, the propulsion power limit then can be set.

The propulsion power limit may be decreased when the comparison of the collected vehicle data and the prescribed vehicle data indicates a first manner of operation (e.g., aggressive driving where the collected vehicle data is greater than the prescribed vehicle data or otherwise indicates aggressive operation), and increase the power limit when the comparison of the collected vehicle data and the prescribed vehicle data indicates a second manner of operation different from the first manner of operation (e.g., normal or preferred operation where the collected vehicle data is at or less than the prescribed vehicle data).

For example, the propulsion power limit may be decreased as the event count increases, and the propulsion power limit may be increased (up to a preset maximum value) as the event count decreases. In setting the propulsion power limit, a relationship between the individual or aggregate event counters and the propulsion power limit can be linear or non-linear. For example, in a linear relationship as the event count increases the propulsion limit proportionally decreases (e.g., for each event count the power is limited by a corresponding percentage). Thus, if there are 10 event counts the propulsion power limit may be set to 90%, and if there are 25 event counts the propulsion power limit may be set to 75%. In a non-linear relationship as the event count increases the propulsion power limit non-linearly decreases. Thus, for event counts up to a first threshold (e.g., 10) no reduction may be made to the propulsion power limit, for events counts greater than the first threshold but less than a second threshold (e.g., 20) the propulsion power limit may be set to 90%, and for event counts exceeding the second threshold the propulsion power limit may be reduced to 60%. Other variations of the linear and non-linear relationships are possible (e.g., non-linear relationships that are exponential, non-linear relationships with more steps, linear relationships that have a slope other than 1, etc.).

Once the propulsion power limit has been determined, then at step 56 the propulsion power limit is applied to at least one of the hybrid mechanism 15 or the prime mover 11 to limit the total propulsion power applied to the wheels 12. Application of the propulsion power limit may depend on the type of hybrid vehicle (hydraulic, electric). For example, in a hydraulic hybrid power unit power from the hydraulic unit to the hydraulic motor may be limited via control of valves that supply hydraulic power to the motor and/or a position of the motor's swashplate, while in an electric hybrid vehicle power may be limited by controlling current provided to electric motors. Additionally, power produced by the prime mover 11 also may be limited to achieve the desired propulsion power limit. In this regard, the fuel provided to the prime mover and/or operating speed may be limited to achieve the desired power limit.

Next at step 58 the available propulsion power is output to the vehicle driver using, for example, the display device 30, e.g., an LCD or LED display device, a light bar having different colors representing different power levels, etc. It is also envisaged that the output is in the form of a percentage of total available power. It is also envisaged that the output may be in the form of a bar graph, digital gauge, color code or the like. The propulsion power limit output may take on numerous forms depending on the specific application.

At step 60 the vehicle operator views the propulsion power output on the display 30, and preferably modifies his driving characteristics to maintain the propulsion power output at or near full power. In this manner, the driver is provided with real-time feedback that encourages the driver to operate the hybrid vehicle in a manner that minimises fuel consumption and wear and tear on the vehicle. Moreover, fuel consumption may be reduced and maintenance intervals increased, resulting in cost savings for the vehicle owner.

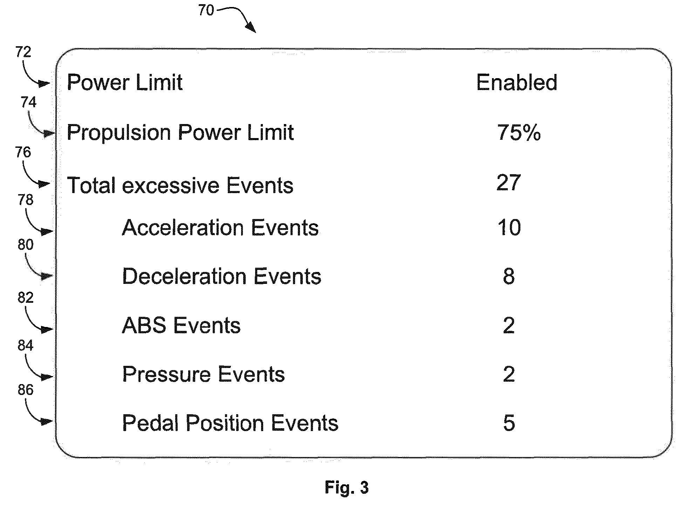

Fig. 3 shows an operator interface 70 that may be used to inform the vehicle operator of the current propulsion status of the vehicle 10. The current status 72 of the adaptive power control may be displayed, where "enabled" indicates the control is active and "disabled" indicates the control is inactive. As noted above, the adaptive power control may be enabled or disabled by user having sufficient privileges (e.g., a supervisor, vehicle owner, etc.).

The operator interface 70 includes propulsion power limit output 74 that indicates the power level that may be applied to propel the vehicle 10. In the example shown in Fig. 3 the power limit is expressed as a percentage of full power. Other forms may be used to convey the power limit without departing from the scope of the invention. For example, the power limit may be displayed as a bar graph, a color progression, the actual power, etc.

The operator interface 70 may optionally include an output that displays the combined aggregate event count 78 as well as event counts for each activity that may cause the event counter to increment/decrement. For example, the operator interface 70 may include an acceleration event output 78, a deceleration event output 80, an ABS event output 82, a pressure event output 84 and a pedal position event output 86. By providing the operator with feedback regarding which events are being detected, the operator can modify his driving habits to reduce such events and prevent propulsion power from being limited.

It is envisaged that the mechanical gear set could alternatively include a planetary mechanical gear set. Also, the hybrid mechanism could alternatively include electric motors and generators and batteries and the operation of the vehicle body power equipment could be assisted by stored electrical energy.

## Claims

1. A hybrid drive vehicle control method for a hybrid drive vehicle having a prime mover, drive wheels, a hybrid mechanism having an energy storage device, and an electrical controller, the method comprising:
collecting vehicle data indicative of operation of the vehicle;
comparing the collected vehicle data to prescribed data, the prescribed data corresponding to a desired operation of the vehicle; and
setting a propulsion power limit of at least one of the hybrid mechanism or the prime mover based on the comparison.

2. The method according to claim 1, in which comparing the collected vehicle data includes determining, based on the comparison, an event count corresponding to a relationship between the collected vehicle data and the prescribed vehicle data over a prescribed event period.

3. The method according to claim 2, in which setting the propulsion power limit includes basing the propulsion power limit on the event count.

4. The method according to claim 2 or claim 3, in which determining the event count includes incrementing the event count each time the collected vehicle data is exceeds the prescribed data over the prescribed event period.

5. The method according to any one of claims 2 to 4, in which determining the event count includes decrementing the event count each time the collected vehicle data is less than the prescribed data over the prescribed event period.

6. The method according to claim 5, in which decrementing the event count includes decrementing the event count when the collected vehicle data is less than a predetermined percentage of the prescribed vehicle data.

7. The method according to claim 5, in which decrementing the event count includes decrementing the event count when the collected vehicle data is less than or equal to the prescribed vehicle data over a prescribed time period.

8. The method according to any one of claims 2 to 7, in which setting the propulsion power limit based on the event count includes:
decreasing the propulsion power limit as the event count increases; and
increasing the propulsion power limit as the event count decreases.

9. The method according to any one of claims 2 to 8, in which a relationship between the event count and the power limit is non-linear.

10. The method according to any one of claims 1 to 9, in which collecting vehicle data comprises collecting at least one of acceleration data, deceleration data, a brake pressure command, a brake pedal position, or automatic braking system activity.

11. The method according to any one of claims 1 to 10, in which determining the propulsion power limit includes decreasing the propulsion power limit when the comparison of the collected vehicle data and the prescribed vehicle data indicates a first manner of operation, and increasing the propulsion power limit when the comparison of the collected vehicle data and the prescribed vehicle data indicates a second manner of operation different from the first manner of operation.

12. The method according to claim 11, in which the first manner of operation includes the collected vehicle data exceeding the prescribed vehicle data, and in which the second manner of operation includes the collected vehicle data being less than the prescribed vehicle data..

13. The method according to any one of claims 1 to 12, which includes applying the propulsion power limit to at least one of the hybrid mechanism or the prime mover to limit a propulsion power output of the respective prime mover or hybrid mechanism to the drive wheels.

14. The method according to any one of claims 1 to 13, which includes providing the propulsion power limit to a driver of the vehicle.

15. A hybrid vehicle control system, comprising:
the electrical controller having a processor and memory; and
logic stored in the memory and executable by the processor, the logic adapted to cause the processor to perform the method according to any one of claims 1 to 14.
